# EUROPEAN PATENT APPLICATION

(11) **EP 4 756 985 A1**
(43) Date of publication of application: **10.06.2026**
(21) Application number: 24922451.0
(22) Date of filing: 23.12.2024
(51) Int. Cl.: H01M 10/44, H01M 4/04, H01M 10/04, H02J 7/00

(54) **BATTERY ACTIVATION PROCESS FACILITY**

(30) Priority: 30.01.2024 KR 20240014068
(71) Applicant: LG Energy Solution, Ltd., Seoul 07335 (KR)
(72) Inventor: KIM, Myung-Hwan, Daejeon 34122 (KR); RYU, Je-Chang, Daejeon 34122 (KR); KIM, Seung-Choo, Daejeon 34122 (KR)
(74) Representative: Goddar, Heinz J.
(86) International application number: PCT/KR2024/020960
(87) International publication number: WO 2025/164942

(57) **Abstract**

A battery activation process facility according to the present disclosure may include a plurality of charging and discharging devices disposed in a horizontal direction and a vertical direction; and duct modules connected to the plurality of charging and discharging devices, wherein the charging and discharging device may include a jig section having a charging and discharging jig for charging and discharging battery cells; a power section having a power supply unit for supplying charging and discharging power to the charging and discharging jig; and an enclosure storing the jig section and the power section and having a ventilation hole provided on at least one side surface thereof, wherein the duct module may be configured to be in direct communication with the ventilation hole of each of the charging and discharging devices.

## Description

### TECHNICAL FIELD

The present disclosure relates to a battery activation process facility, and more specifically, to a battery activation process facility capable of effectively discharging heat from charging and discharging devices.

This application is based on and claims priority from Korean Patent Application No. 10-2024-0014068, filed on January 30, 2024, with the Korean Intellectual Property Office, the disclosure of which is incorporated herein in its entirety by reference.

### BACKGROUND ART

The production of a secondary battery is largely divided into pre-process and post-process. The electrode process of making electrode plates of the positive electrode and the negative electrode and the assembly process of processing and assembling the electrodes and raw materials to make finished products fall under the pre-process, while the activation process of activating the polarity of the battery by alternating charging and discharging and the life test of calculating the life, capacity, and efficiency of the battery fall under the post-process.

The battery immediately after the assembly process only has a form and may not function at all. This battery is subjected to the activation work of charging and discharging the battery to give electrical characteristics thereto, the aging work of waiting for the positive and negative electrode materials to be sufficiently impregnated with electrolyte, and the degassing work that is limited to a pouch battery but removes internal gas if necessary after repeating this process sufficiently, and then is equipped with the battery performance. The battery that has undergone this process is inspected for internal resistance and open circuit voltage to be given a final grade, and the battery cells are shipped.

Meanwhile, in the conventional battery activation process, as a large number of batteries are charged and discharged, the temperature of the charging and discharging device increases due to the heat generated by the large number of batteries, resulting in a decrease in the charging and discharging efficiency. Moreover, a large number of charging and discharging devices are required to activate a large number of battery cells simultaneously, and if the heat generated from these charging and discharging devices is not properly resolved, problems such as deterioration of the quality of the battery cells, difficulty in charging and discharging, or the occurrence of device defects may cause the activation process to be unable to continue.

Therefore, there is a need for a method capable of effectively dissipating the heat generated from the battery cells in the power section in the battery activation process.

### DISCLOSURE

### Technical Problem

The present disclosure is designed to solve the above-described problems, and therefore the present disclosure is directed to providing a battery activation process facility capable of effectively dissipating heat generated from a plurality of charging and discharging devices.

Technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a battery activation process facility including a plurality of charging and discharging devices disposed in a horizontal direction and a vertical direction; and duct modules connected to the plurality of charging and discharging devices, wherein the charging and discharging device may include a jig section having a charging and discharging jig for charging and discharging battery cells; a power section having a power supply unit for supplying charging and discharging power to the charging and discharging jig; and an enclosure storing the jig section and the power section and having a ventilation hole provided on at least one side surface thereof, wherein the duct module may be configured to be in direct communication with the ventilation hole of each of the charging and discharging devices.

Charging and discharging device groups in which the charging and discharging devices are stacked to a predetermined height in the vertical direction may be arranged along the horizontal direction.

The duct modules may be disposed alternately with the charging and discharging device groups along the horizontal direction, and the duct module disposed between two neighboring charging and discharging device groups may be configured to communicate with the ventilation holes of the charging and discharging devices forming the two charging and discharging device groups.

The duct module may include a duct body extending along the stacking direction of the charging and discharging devices and in close contact with an outer surface of each of the charging and discharging device groups; and a plurality of connection portions provided at predetermined intervals along the extension direction of the duct body to be connected to the ventilation holes of each of the charging and discharging devices.

The duct body may include a plurality of direct pipes therein, and each of the plurality of direct pipes may be in one-to-one connection with the plurality of connection portions.

The enclosure may have a shielding plate dividing the jig section and the power section and provided to allow ventilation therein, and the jig section and the power section may be disposed on the left and right sides based on the shielding plate.

The enclosure may include a first ventilation hole provided on an outer surface facing the shielding plate with the jig section therebetween, and a second ventilation hole provided on an outer surface facing the shielding plate with the power section therebetween, wherein the first ventilation hole and the second ventilation hole may each be connected to different duct modules.

The enclosure may have a shielding plate dividing the jig section and the power section and provided to allow ventilation therein, and the jig section and the power section may be disposed on the upper and lower sides based on the shielding plate.

The ventilation holes may include an upper first ventilation hole provided on the left side of the jig section and an upper second ventilation hole provided on the right side of the jig section that are positioned above the shielding plate; and a lower first ventilation hole provided on the left side of the power section and a lower second ventilation hole provided on the right side of the power section that are positioned below the shielding plate, wherein the upper first ventilation hole and the lower first ventilation hole may be configured to be connected to the duct module disposed on the left side of the charging and discharging device, and the upper second ventilation hole and the lower second ventilation hole may be configured to be connected to the duct module disposed on the right side of the charging and discharging device.

The charging and discharging jig may include a positive electrode jig connected to positive electrodes of the battery cells; and a negative electrode jig connected to negative electrodes of the battery cells, wherein the negative electrode jig may include negative electrode grippers in one-to-one contact with the negative electrodes of the battery cells and a gripper negative electrode bus bar integrally connected to the negative electrode grippers.

The power supply unit of the power section may include a plurality of channel boards that each have a positive electrode terminal and a negative electrode terminal and supply power to the corresponding battery cells, wherein the negative electrode terminals of the plurality of channel boards may be connected to a channel board negative electrode bus bar connected to the gripper negative electrode bus bar.

The jig section may include a cell tray capable of integrally storing and transporting the battery cells.

### Advantageous Effects

According to the present disclosure, a battery activation process facility capable of effectively dissipating heat generated from a plurality of charging and discharging devices may be provided.

The battery activation process facility according to the present disclosure may independently discharge heat from each of the charging and discharging devices through a duct module, thereby more effectively and quickly maintaining the appropriate temperature of each of the charging and discharging devices.

In addition, the technical effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a view schematically illustrating the main configuration of a battery activation process facility according to one embodiment of the present disclosure.
FIG. 2 is a view schematically illustrating the configuration of a charging and discharging device according to one embodiment of the present disclosure.
FIG. 3 is a view illustrating a portion of the battery activation process facility of FIG. 1.
FIG. 4 is a view showing that charging and discharging devices and duct modules are separated from each other according to one embodiment of the present disclosure.
FIG. 5 is a schematic cross-sectional view of region K1 of FIG. 3.
FIG. 6 is a view schematically illustrating the main configuration of a jig section according to one embodiment of the present disclosure.
FIG. 7 is a view schematically illustrating the configuration of the negative electrode jig of FIG. 6.
FIG. 8 is a view schematically illustrating the configuration of a charging and discharging device according to another embodiment of the present disclosure.
FIG. 9 is a view showing that charging and discharging devices and duct modules are separated from each other according to another embodiment of the present disclosure.
FIG. 10 is a view corresponding to FIG. 3, schematically illustrating a portion of a battery activation process facility according to another embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

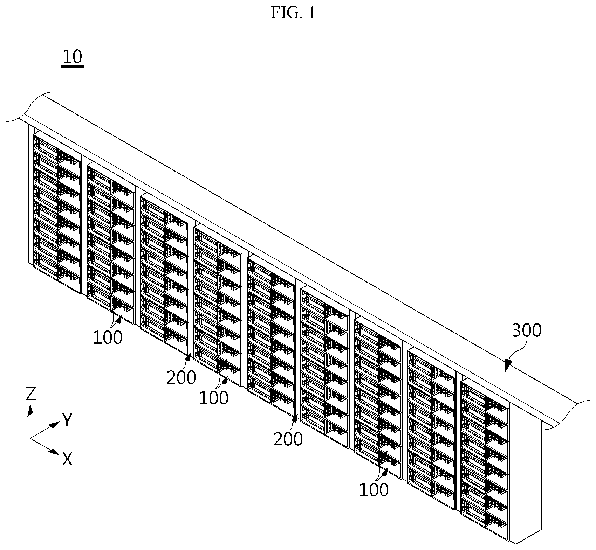

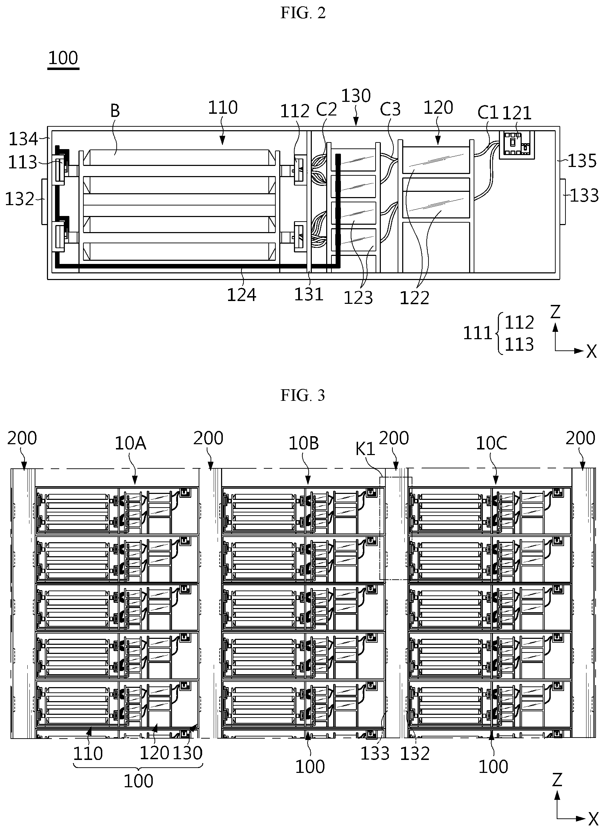

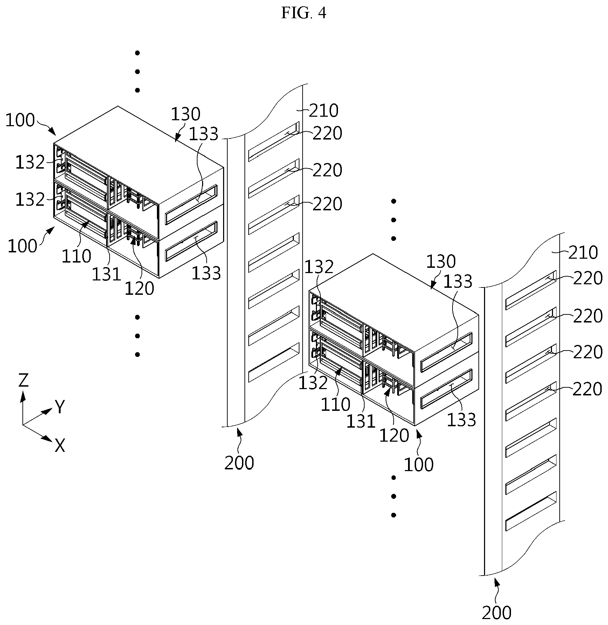

FIG. 1 is a view schematically illustrating the main configuration of a battery activation process facility according to one embodiment of the present disclosure, FIG. 2 is a view schematically illustrating the configuration of a charging and discharging device according to one embodiment of the present disclosure, FIG. 3 is a view illustrating a portion of the battery activation process facility of FIG. 1, and FIG. 4 is a view showing that charging and discharging devices and duct modules are separated from each other according to one embodiment of the present disclosure.

Referring to these drawings, a battery activation process facility 10 according to one embodiment of the present disclosure includes a plurality of charging and discharging devices 100 disposed in a horizontal direction (X direction) and a vertical direction (Z direction), and duct modules 200 connected to the charging and discharging devices 100 to provide cold air to the charging and discharging devices 100 or to remove heat from the charging and discharging devices 100.

The charging and discharging device 100 may be configured to include a jig section 110, a power section 120, and an enclosure 130.

The jig section 110 is a part that charges and discharges battery cells B, and may include a charging and discharging jig 111 that receives power from the power section 120 and charges the battery cells B or transmits the discharge current of the battery cells B to the power section 120, and a cell tray 114 for storing the battery cells B.

The cell tray 114 may be configured to integrally store and transport the battery cells B. The battery cells B may be brought into the charging and discharging device 100 in a state of being stored in the cell tray 114 to be repeatedly charged and discharged, and may be taken out of the charging and discharging device 100 once activation is completed through charging and discharging. At this time, the cell tray 114 may be transported by a stacker crane (not shown) that may move along the arrangement direction of the charging and discharging devices 100. The charging and discharging jig 111 will be described later for convenience of description.

The power section 120 is a part that supplies power to the charging and discharging jig 111 and may include a power supply unit. The power supply unit may include a main board 122 and a channel board 123, and the main board 122 may be configured to include an AC/DC converter or a DC/DC converter that rectifies and steps down power from an external power system and transmits the power to the channel board 123 or vice versa. The channel board 123 serves to receive power from the main board 122 and supply the power to the battery cell B or transmit the power to the main board 122 when the battery cell B is discharged. The channel board 123 may be configured to include a DC/DC converter for converting the power supplied from the main board 122 to match the charging and discharging characteristics of the battery cell B.

The power section 120 may further include a power circuit breaker 121. The power circuit breaker 121 is a component responsible for interrupting an overcurrent. The power circuit breaker 121, the main board 122, the channel board 123, and the charging and discharging jig 111 may be electrically connected by connection members C1, C2, C3 such as cables or the like.

Each of the charging and discharging devices 100 may be configured to receive power from an external distribution board, and to convert the power in the power section 120 to match the charging and discharging characteristics of the battery cell B and supply the power to the jig section 110 or vice versa.

The enclosure 130 is a component capable of storing or coupling the jig section 110 and the power section 120 therein.

Inside the enclosure 130, the jig section 110 and the power section 120 are preferably accommodated in physically separated spaces. For example, when charging and discharging the battery cells B, heat may be generated in the jig section 110 or a fire may occur due to abnormal heat generation of the battery cells B, and in this case, it is safe and advantageous for extinguishing the fire that the power section 120 is spaced apart from the jig section 110 in a separated space. Meanwhile, since the heat generation of the power section 120 may affect the battery cells B being charged and discharged, it is preferable that the jig section 110 and the power section 120 are disposed in a thermally separated space as much as possible.

The enclosure 130 may have ventilation holes 132, 133 on at least one side surface to remove heat from the jig section 110 and/or the power section 120. The ventilation holes 132, 133 may be configured to be in direct communication with the duct modules 200.

The enclosure 130 may be configured to be stackable in the form of a roughly cuboidal frame, cabinet, or box. In other words, the plurality of enclosures 130 may be stacked in the vertical direction on top of each other, and may be configured to be fixedly coupled to each other using, for example, bolts or the like, although not illustrated in detail.

The battery activation process facility 10 including such charging and discharging devices, as illustrated in FIGS. 1 and 3, may include charging and discharging device groups 10A, 10B, 10C... in which charging and discharging devices 100 are stacked to a predetermined height in the vertical direction (Z direction). The charging and discharging device groups 10A, 10B, 10C... may be arranged along the horizontal direction (X direction).

The duct module 200 may be disposed between the charging and discharging device groups 10A, 10B, 10C... arranged in the horizontal direction. That is, the duct modules 200 may be disposed alternately with the charging and discharging device groups 10A, 10B, 10C... along the horizontal direction. And, the duct modules 200 may be connected to at least one integrated piping 300. The integrated piping 300 may be disposed above the charging and discharging device groups 10A, 10B, 10C... as shown in FIG. 1.

The integrated piping 300 communicates with the duct modules 200 and may extend, for example, to the outside of the factory (where the battery activation process facility 10 is built). Meanwhile, the integrated piping 300 is not an essential configuration and thus may be omitted. That is, the battery activation process facility 10 according to the present disclosure may be configured to exhaust or supply air only with the duct modules 200 without using the integrated piping 300.

Hereinafter, the connection configuration between the duct modules 200 and each of the charging and discharging devices 100 will be described in more detail.

As illustrated in FIG. 3, for example, the duct module 200 disposed between two neighboring charging and discharging device groups 10B, 10C may be configured to communicate with the ventilation holes of the charging and discharging devices 100 forming the two charging and discharging device groups 10B, 10C.

To this end, the duct module 200 may include a duct body 210 and a plurality of connection portions 220, as illustrated in FIG. 4. The duct body 210 may be configured to extend along the stacking direction (Z direction) of the charging and discharging devices 100 and to be in close contact with an outer surface of each of the charging and discharging device groups. And, the plurality of connection portions 220 may be connected to the ventilation holes 132, 133 of the charging and discharging devices 100. For example, the ventilation holes 132, 133 may be configured to be at least partially fitted into the connection portion 220 of the corresponding duct body 210. The plurality of connection portions 220 may be provided at predetermined intervals along the extension direction of the duct body 210 to correspond to the ventilation holes 132, 133 of the charging and discharging devices 100 stacked in the vertical direction.

According to this configuration, cooling air may be supplied to each of the charging and discharging devices 100 through the duct module 200 or heat may be extracted from each of the charging and discharging devices 100 through the duct module 200 to maintain an appropriate operating temperature of the charging and discharging devices 100.

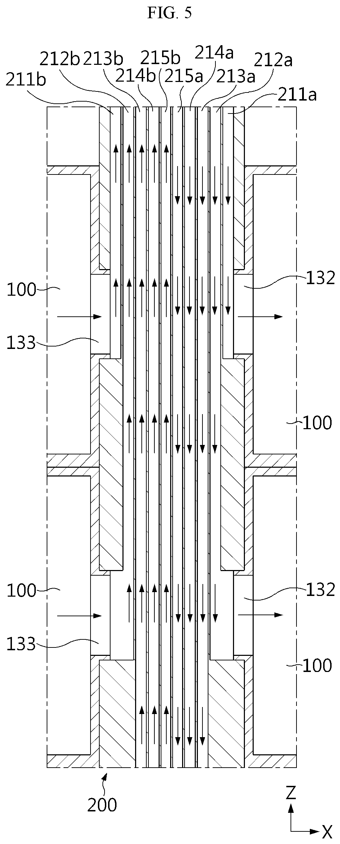

More specifically, referring mainly to FIG. 5 together with FIGS. 3 to 4, the duct body 210 may include a plurality of direct pipes 211a to 215a, 211b to 215b therein, and the plurality of direct pipes 211a to 215a, 211b to 215b may be configured to be in one-to-one connection with the plurality of connection portions 220.

The stacked charging and discharging devices 100 are connected to the connection portions 220 of the duct module 200 corresponding to each of the ventilation holes 132, 133, and the connection portions 220 are individually connected to different direct pipes 211a to 215a, 211b to 215b. Thus, the heat generated by each of the charging and discharging device 100 may be individually exhausted along the respective corresponding direct pipes 211a to 215a, 211b to 215b. Therefore, the temperature of the charging and discharging devices 100 may be managed more efficiently.

Additionally, according to the plurality of direct pipes 211a to 215a, 211b to 215b, cooling air may be individually provided to each of the charging and discharging devices 100, and heat may be extracted from each of the charging and discharging devices 100.

As shown in FIGS. 2 and 4, the enclosure 130 according to the present embodiment has a shielding plate 131 dividing the jig section 110 and the power section 120 and provided to allow ventilation therein, and the jig section 110 and the power section 120 may be disposed on the left and right sides with the shielding plate 131 therebetween. And, the ventilation holes 132, 133 provided in the enclosure 130 may include a first ventilation hole 132 provided on the left side surface 134 corresponding to the outer surface facing the shielding plate 131 with the jig section 110 therebetween, and a second ventilation hole 133 provided on the right side surface 135 corresponding to the outer surface facing the shielding plate 131 with the power section 120 therebetween.

Referring to FIGS. 3 and 4 together, duct modules 200 are respectively disposed on the left and right sides of the charging and discharging device 100 based on the charging and discharging device 100, and the first ventilation hole 132 of the charging and discharging device 100 may be connected to the connection portions 220 of the left-side duct module 200, and the second ventilation hole 133 of the charging and discharging device 100 may be connected to the connection portions 220 of the right-side duct module 200.

With the duct module 200 as a reference, charging and discharging devices 100 are respectively disposed on the left and right sides of the duct module 200, and the second ventilation holes 133 of the left-side charging and discharging devices 100 may be connected to the left-side connection portions 220 of the duct module 200, and the first ventilation holes 132 of the right-side charging and discharging devices 100 may be connected to the right-side connection portions 220 of the duct module 200.

And, referring to FIG. 5, the second ventilation holes 133 of the left-side charging and discharging devices 100 may be configured to be in one-to-one communication with some direct pipes 211b to 215b among the plurality of direct pipes accommodated inside the duct module 200, and the first ventilation holes 132 of the right-side charging and discharging devices 100 may be configured to be in one-to-one communication with the remaining direct pipes 211a to 215a among the plurality of direct pipes.

Here, the direct pipes 211a to 215a connected to the first ventilation holes 132 among the plurality of direct pipes may be used as supply pipes for supplying cooling air, and the direct pipes 211b to 215b connected to the second ventilation holes 133 may be used as exhaust pipes for removing heat.

That is, the battery activation process facility 10 according to the present disclosure may be configured such that the charging and discharging device groups 10A, 10B, 10C... and the duct modules 200 are alternately disposed, and the ventilation holes 132, 133 of the charging and discharging devices 100 are connected to the duct module 200 as described above. According to this embodiment, in each of the charging and discharging devices 100, cooling air may be introduced into the enclosure 130 through the direct pipes 211a to 215a used as the air supply pipes and the first ventilation hole 132, and the cooling air may absorb heat from the jig section 110 and the power section 120. And, the heat accumulated inside the enclosure 130 may be discharged to the outside of the battery activation process facility 10 along the second ventilation hole 133 and the direct pipes 211b to 215b used as the exhaust pipes.

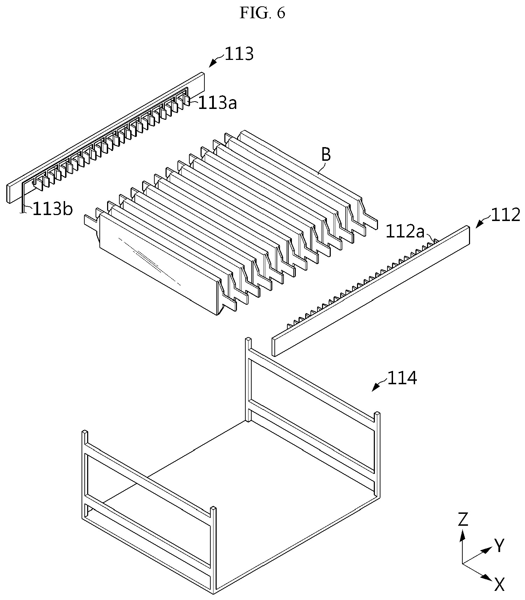

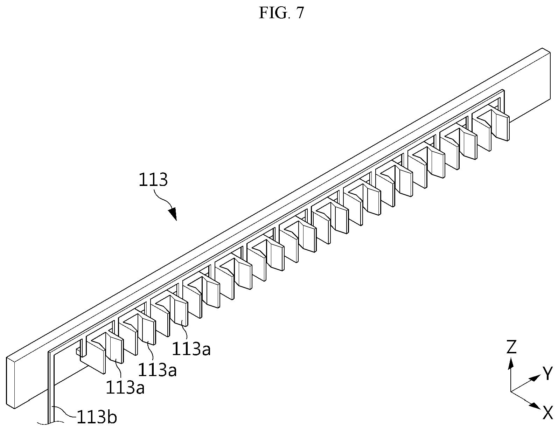

Next, the connection configuration between the charging and discharging jig 111 and the power section 120 of the charging and discharging device 100 will be described with reference to FIGS. 6 and 7 together with FIG. 2.

As described above, the charging and discharging device 100 according to one embodiment of the present disclosure has a shielding plate 131 dividing the jig section 110 and the power section 120 and provided to allow ventilation inside the shielding plate 131, and the jig section 110 and the power section 120 may be disposed on the left and right sides with the shielding plate 131 therebetween.

The jig section 110 may include a charging and discharging jig 111 and a cell tray 114.

The charging and discharging jig 111 may include a positive electrode jig 112 connected to positive electrodes of the battery cells B and a negative electrode jig 113 connected to negative electrodes of the battery cells B.

Referring to FIG. 6, the positive electrode jig 112 includes positive electrode grippers 112a in one-to-one contact with the positive electrodes (leads) of the battery cells B. The positive electrode grippers 112a may be provided in a roughly clip shape capable of clamping the positive electrodes (leads) of the battery cells B. The present embodiment schematically shows one example of the positive electrode grippers 112a. The positive electrode gripper 112a may be of any shape as long as it may maintain a stable contact with the positive electrode (lead) of the battery cell B. And, although not shown for convenience of drawing, each of the positive electrode grippers 112a may be in one-to-one connection with the positive electrode terminals of the channel boards 123 of the power section 120, and at this time, the positive electrode grippers 112a and the positive electrode terminals of the channel boards 123 may be connected by power cables C3.

The negative electrode jig 113 includes negative electrode grippers 113a in one-to-one contact with the negative electrodes (leads) of the battery cells B. The negative electrode grippers 113a may be provided in a roughly clip shape capable of clamping the negative electrodes (leads) of the battery cells B, like the positive electrode grippers 112a. The shape of the negative electrode gripper 113a of the present embodiment is shown as one example. That is, the negative electrode gripper 113a may be of any shape as long as it may maintain a stable contact with the negative electrode (lead) of the battery cell B.

Meanwhile, the negative electrode jig 113 according to one embodiment of the present disclosure may further include a gripper negative electrode bus bar 113b. The gripper negative electrode bus bar 113b may be provided in the form of a rod or plate as a metal material having electrical conductivity. Additionally, the gripper negative electrode bus bar 113b may be configured to be connected to each of the negative electrode grippers 113a, as illustrated in FIG. 7. In this case, the negative electrode grippers 113a are electrically connected in parallel, and the voltages across the negative electrode grippers 113a may be equipotential. This gripper negative electrode bus bar 113b may be connected to a channel board negative electrode bus bar 124 (see FIG. 2).

The channel board negative electrode bus bar 124 is a connection member that is provided in the form of a rod or plate as a metal material having electrical conductivity and extends from the jig section 110 to the power section 120. The channel board negative electrode bus bar 124 may be provided in an insulated form, having its surface wrapped with an insulating film or an insulating tube.

The channel board negative electrode bus bar 124 may have one side connected to the gripper negative electrode bus bar 113b in the jig section 110 and the other side connected to the negative electrode terminals of the plurality of channel boards 123 in the power section 120. In this way, by connecting the negative electrode grippers 113a and the negative electrode terminals (not shown) of the channel board 123 using the gripper negative electrode bus bar 113b and the channel board negative electrode bus bar 124, a plurality of power cables may be omitted. According to this configuration, the amount of power cable used is reduced, thereby reducing line resistance, which may result in reducing voltage drop and energy loss and lowering the amount of heat generated.

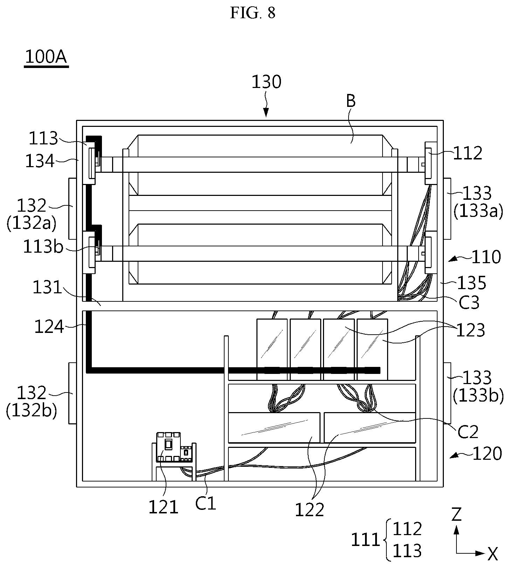

Next, referring to FIGS. 8 to 10, a battery activation process facility 10 according to other embodiments of the present disclosure will be briefly described. The same member numbers as those of the above-described embodiment represent the same members, and duplicate descriptions of the same members will be omitted, and differences from the above-described embodiment will be mainly described.

Referring to FIG. 8, a battery activation process facility 10 according to another embodiment of the present disclosure includes a charging and discharging device (100A) in which a jig section 110 and a power section 120 are vertically disposed inside an enclosure 130, unlike the above-described embodiment.

The charging and discharging device 100A has a shielding plate 131 dividing the jig section 110 and the power section 120 and provided to allow ventilation inside the enclosure 130. The shielding plate 131 may be provided in a grating structure to be horizontal to the ground and to allow ventilation. Based on this shielding plate 131, the jig section 110 may be disposed above the shielding plate 131 and the power section 120 may be disposed below the shielding plate 131.

As compared to the charging and discharging device 100 of the above-described embodiment, the charging and discharging device 100A may individually provide cooling air to the jig section 110 and the power section 120 and remove heat, so that the cooling efficiency of the charging and discharging devices 100A may be increased compared to the above-described embodiment.

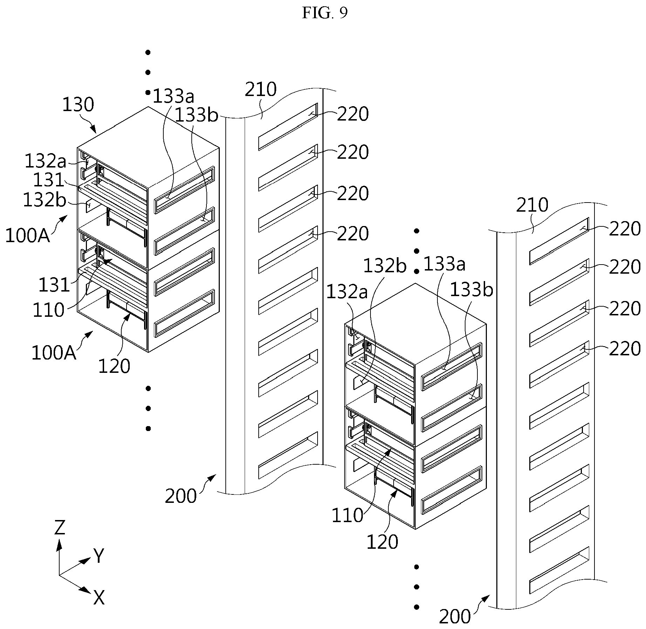

Specifically, referring to FIGS. 8 and 9, the ventilation holes 132 of the charging and discharging device 100A according to the present embodiment include an upper first ventilation hole 132a provided on the left side of the jig section 110 and an upper second ventilation hole 133a provided on the right side of the jig section 110 that are positioned above the shielding plate 131. Additionally, the ventilation holes 132 further include a lower first ventilation hole 132b provided on the left side of the power section 120 and a lower second ventilation hole 133b provided on the right side of the power section 120 that are positioned below the shielding plate 131.

The upper first ventilation hole 132a and the lower first ventilation hole 132b may be configured to be connected to the duct module 200 disposed on the left side of the charging and discharging device 100A, and the upper second ventilation hole 133a and the lower second ventilation hole 133b may be configured to be connected to the duct module 200 disposed on the right side of the charging and discharging device 100A.

As compared to the above-described embodiment of FIG. 4, the duct module 200 has no substantial structural difference, except for a difference in the number and positions of the direct pipes. That is, the duct module 200 may have a plurality of direct pipes therein and may be disposed between two charging and discharging device groups stacked in the vertical direction.

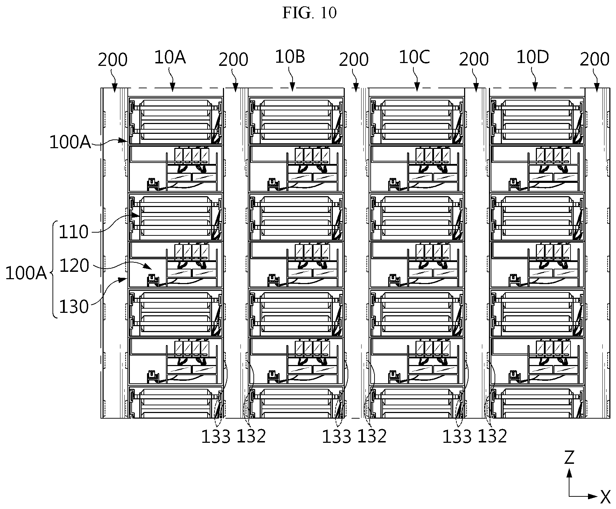

And, among the plurality of direct pipes, the direct pipes connected to the upper first ventilation hole 132a and the lower first ventilation hole 132b of the charging and discharging device 100A positioned on the right side of the duct module 200 may be used as supply pipes for supplying cooling air, and the direct pipes connected to the upper second ventilation hole 133a and the lower second ventilation hole 133b of the charging and discharging device 100A positioned on the left side of the duct module 200 may be used as exhaust pipes for removing heat. In this pattern, the charging and discharging device groups 10A, 10B, 10C, 10D and the duct modules 200 according to another embodiment of the present disclosure may be disposed alternately, as shown in FIG. 10.

According to this configuration, the jig section 110 of each of the charging and discharging devices 100A may receive cooling air through the duct module 200 provided on the left side and the upper first ventilation hole 132a, and may remove heat through the upper second ventilation hole 133a and the duct module 200 provided on the right side. Additionally, apart from the jig section 110, the power section 120 of each of the charging and discharging devices 100A may receive cooling air through the duct module 200 disposed on the left side and the lower first ventilation hole 132b, and may remove heat through the lower second ventilation hole 133b and the duct module 200 disposed on the right side. Therefore, according to this embodiment, the cooling efficiency of each of the charging and discharging devices 100A may be further increased, and the heat transfer between the jig section 110 and the power section 120 may be minimized.

As described above, in accordance with the battery activation process facility according to the present disclosure, a battery activation process facility capable of effectively dissipating heat generated from a plurality of charging and discharging devices may be provided. In particular, the battery activation process facility according to the present disclosure may independently discharge heat from each of the charging and discharging devices through a duct module, thereby more effectively and quickly maintaining the appropriate temperature of each of the charging and discharging devices.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

Meanwhile, the terms indicating directions as used herein such as upper, lower, left, right, front, and back are used for convenience of description only, and it is obvious to those skilled in the art that the terms may vary depending on the position of an observer or a reference object.

## Claims

1. A battery activation process facility comprising:
a plurality of charging and discharging devices disposed in a horizontal direction and a vertical direction; and
duct modules connected to the plurality of charging and discharging devices,
wherein the charging and discharging device comprises:
a jig section having a charging and discharging jig for charging and discharging battery cells; a power section having a power supply unit for supplying charging and discharging power to the charging and discharging jig; and an enclosure storing the jig section and the power section and having a ventilation hole provided on at least one side surface thereof,
wherein the duct module is configured to be in direct communication with the ventilation hole of each of the charging and discharging devices.

2. The battery activation process facility according to claim 1,
wherein charging and discharging device groups in which the charging and discharging devices are stacked to a predetermined height in the vertical direction are arranged along the horizontal direction.

3. The battery activation process facility according to claim 2,
wherein the duct modules are disposed alternately with the charging and discharging device groups along the horizontal direction, and
the duct module disposed between two neighboring charging and discharging device groups is configured to communicate with the ventilation holes of the charging and discharging devices forming the two charging and discharging device groups.

4. The battery activation process facility according to claim 2,
wherein the duct module comprises:
a duct body extending along the stacking direction of the charging and discharging devices and in close contact with an outer surface of each of the charging and discharging device groups; and
a plurality of connection portions provided at predetermined intervals along the extension direction of the duct body to be connected to the ventilation holes of each of the charging and discharging devices.

5. The battery activation process facility according to claim 4,
wherein the duct body comprises a plurality of direct pipes therein, and each of the plurality of direct pipes is in one-to-one connection with the plurality of connection portions.

6. The battery activation process facility according to claim 1,
wherein the enclosure has a shielding plate dividing the jig section and the power section and provided to allow ventilation therein, and
the jig section and the power section are disposed on the left and right sides based on the shielding plate.

7. The battery activation process facility according to claim 6,
wherein the enclosure comprises:
a first ventilation hole provided on an outer surface facing the shielding plate with the jig section therebetween, and a second ventilation hole provided on an outer surface facing the shielding plate with the power section therebetween,
wherein the first ventilation hole and the second ventilation hole are each connected to different duct modules.

8. The battery activation process facility according to claim 1,
wherein the enclosure has a shielding plate dividing the jig section and the power section and provided to allow ventilation therein, and
the jig section and the power section are disposed on the upper and lower sides based on the shielding plate.

9. The battery activation process facility according to claim 8,
wherein the ventilation holes comprise:
an upper first ventilation hole provided on the left side of the jig section and an upper second ventilation hole provided on the right side of the jig section that are positioned above the shielding plate; and
a lower first ventilation hole provided on the left side of the power section and a lower second ventilation hole provided on the right side of the power section that are positioned below the shielding plate,
wherein the upper first ventilation hole and the lower first ventilation hole are configured to be connected to the duct module disposed on the left side of the charging and discharging device, and the upper second ventilation hole and the lower second ventilation hole are configured to be connected to the duct module disposed on the right side of the charging and discharging device.

10. The battery activation process facility according to claim 1,
wherein the charging and discharging jig comprises:
a positive electrode jig connected to positive electrodes of the battery cells; and a negative electrode jig connected to negative electrodes of the battery cells,
wherein the negative electrode jig comprises negative electrode grippers in one-to-one contact with the negative electrodes of the battery cells and a gripper negative electrode bus bar integrally connected to the negative electrode grippers.

11. The battery activation process facility according to claim 10,
wherein the power supply unit of the power section comprises:
a plurality of channel boards that each have a positive electrode terminal and a negative electrode terminal and supply power to the corresponding battery cells,
wherein the negative electrode terminal of the plurality of channel boards is connected to a channel board negative electrode bus bar connected to the gripper negative electrode bus bar.

12. The battery activation process facility according to claim 1,
wherein the jig section comprises:
a cell tray capable of integrally storing and transporting the battery cells.
